# EUROPÄISCHE PATENTSCHRIFT

(11) **EP 3 642 038 B1**
(45) Veröffentlichungstag und Bekanntmachung des Hinweises auf die Patenterteilung: **14.02.2024**
(21) Anmeldenummer: 18737888.0
(22) Anmeldetag: 05.07.2018
(51) Int. Cl.: B33Y 10/00, B33Y 30/00, B33Y 40/00, B29C 64/153, B29C 64/232, B29C 64/245, B22F 12/00, B22F 12/41

(54) **VORRICHTUNG UND VERFAHREN ZUM GENERATIVEN HERSTELLEN EINES DREIDIMENSIONALEN OBJEKTS MIT EINEM HUBSYSTEM**
DEVICE AND METHOD FOR GENERATIVELY PRODUCING A THREE-DIMENSIONAL OBJECT WITH A LIFT SYSTEM
DISPOSITIF ET PROCÉDÉ DE FABRICATION GÉNÉRATIVE D'UN OBJET TRIDIMENSIONNEL AVEC SYSTEME DE LEVAGE

(30) Priorität: 28.07.2017 DE 102017213078
(43) Veröffentlichungstag der Anmeldung: 29.04.2020
(73) Patentinhaber: EOS GmbH Electro Optical Systems, 82152 Krailling (DE)
(72) Erfinder: MAIER, Horst, 82152 Planegg (DE)
(74) Vertreter: Prüfer & Partner mbB Patentanwälte · Rechtsanwälte
(86) Internationale Anmeldenummer: PCT/EP2018/068221
(87) Internationale Veröffentlichungsnummer: WO 2019/020340

(56) Entgegenhaltungen:
- EP-A1- 1 790 463
- DE-A1-102007 014 968
- DE-A1-102009 020 987

## Beschreibung

Die vorliegende Erfindung bezieht sich auf eine Herstellvorrichtung bzw. ein Verfahren zum generativen Herstellen eines dreidimensionalen Objekts durch schichtweises Aufbringen und selektives Verfestigen eines Aufbaumaterials, vorzugsweise eines Pulvers, wobei die Herstellvorrichtung eine Bauunterlage enthält, auf der das Objekt auf einer Aufbauoberfläche aufgebaut werden soll, und mit einem Hubsystem zum Halten und Höhenverstellen der Bauunterlage.

Vorrichtungen und Verfahren dieser Art werden beispielsweise beim Rapid Prototyping, Rapid Tooling oder Additive Manufacturing verwendet. Ein Beispiel eines solchen Verfahrens ist unter dem Namen "Selektives Lasersintern oder Laserschmelzen" bekannt. Dabei wird wiederholt eine dünne Schicht eines pulverförmigen Aufbaumaterials aufgebracht und das Aufbaumaterial in jeder Schicht durch selektives Bestrahlen von einem Querschnitt des herzustellenden Objekts entsprechenden Stellen mit einem Laserstrahl selektiv verfestigt.

Vor dem Aufbringen der jeweils nächsten Schicht wird eine Bauunterlage, auf der das Objekt aufgebaut wird, um eine vorbestimmte Höhe abgesenkt. Die Größe der vorbestimmten Höhe bestimmt dabei die Dicke der aufgebrachten Schicht.

Zum Zweck des Absenkens wird die Bauunterlage durch einen höhenverstellbaren Träger gehalten. Gemäß dem Stand der Technik ist der Antrieb zur Höhenverstellung des Trägers unterhalb des Trägers angeordnet:
Zum Beispiel beschreibt EP 1 882 580 B1 eine Anlage zum Aufbau eines Formkörpers, bei der das Objekt innerhalb eines in die Anlage einsetzbaren Wechselbehälters aufgebaut wird. Dabei wird die Bauunterlage durch Tragearme gehalten, die von der Seite durch Ausnehmungen in der Behälterwand hindurchgreifen und von einem Spindelantrieb mit einer außen in der Behälterwand drehbar angeordneten Gewindespindel angetrieben werden.

EP 1 970 463 A1 beschreibt eine Stereolithographievorrichtung, bei der eine Bauunterlage auf der Oberseite einer Bauunterlagenhalterung aufliegt, die mit einer Hubvorrichtung verbunden ist.

DE 102007014968 A1 offenbart eine Vorrichtung zur Herstellung von Gegenständen durch schichtweises Aufbauen aus pulverförmigem Werkstoff, umfassend eine Trägerordnung mit einem Träger und einem den Träger umgebenden Bauzylinder, die gemeinsam einen Bauraum für den Schichtaufbau bilden, wobei der Bauzylinder bezüglich des Trägers vertikal beweglich ist, um mit zunehmender Schichtanzahl einen Bauraum größerer Höhe bilden zu können.

Die Aufgabe der vorliegenden Erfindung besteht darin, eine alternative bzw. verbesserte Vorrichtung bzw. ein alternatives bzw. verbessertes Verfahren zum generativen Herstellen eines dreidimensionalen Objekts durch schichtweises Aufbringen und selektives Verfestigen eines Aufbaumaterials bereitzustellen, bei dem insbesondere bevorzugt eine Aufbauhöhe des herzustellenden Objekts vergrößert sein kann, ohne die Bedienbarkeit zu verschlechtern.

Diese Aufgabe wird gelöst durch eine Herstellvorrichtung gemäß Anspruch 1 und ein Herstellverfahren gemäß Anspruch 12. Weiterbildungen der Erfindung sind jeweils in den Unteransprüchen angegeben. Dabei kann das Verfahren auch durch die untenstehenden bzw. in den Unteransprüchen ausgeführten Merkmale der Vorrichtungen weitergebildet sein oder umgekehrt, bzw. die Merkmale der Vorrichtungen können auch jeweils untereinander zur Weiterbildung genutzt werden.

Das Hubsystem enthält eine Haltevorrichtung, die zum Halten und Höhenverstellen der Bauunterlage geeignet ist. Die Haltevorrichtung ist in einer einem Betriebszustand innerhalb der Herstellvorrichtung entsprechenden Lage so angeordnet, dass die Bauunterlage an der Unterseite der Haltevorrichtung so angebracht ist, dass die Aufbauoberfläche in Richtung zur Haltevorrichtung weist. Mit einem solchen Hubsystem kann beispielsweise der Arbeitsbereich der Vorrichtung vergrößert werden, weil die Bauunterlage weiter nach unten abgesenkt werden kann als bei einem Halten der Bauunterlage von unten. Als Aufbaumaterial können dabei verschiedene Arten von Pulver verwendet werden, insbesondere Metallpulver, Kunststoffpulver, Keramikpulver, Sand, gefüllte oder gemischte Pulver. Anstelle von Pulver können auch andere geeignete Materialien als Aufbaumaterial verwendet werden.

Vorzugsweise enthält das Hubsystem weiter einen Spindelantrieb zur Höhenverstellung der Haltevorrichtung. Dadurch kann beispielsweise eine präzise Verstellbarkeit der Haltevorrichtung erzielt werden.

Vorzugsweise enthält der Spindelantrieb eine Antriebseinheit, die an der Haltevorrichtung angeordnet ist. Dadurch kann beispielsweise einfach eine Drehbewegung einer Spindelmutter verwirklicht werden.

Vorzugsweise enthält der Spindelantrieb eine Spindelachse, die in der dem Betriebszustand innerhalb der Herstellvorrichtung entsprechenden Lage oberhalb der für das Halten der Bauunterlage vorgesehenen Stelle der Haltevorrichtung angeordnet ist. Dadurch kann beispielweise der Raum unterhalb der für das Halten der Bauunterlage vorgesehenen Stelle freigehalten und dadurch ein Verstellbereich der Bauunterlage vergrößert werden. Dabei ist "oberhalb" nicht auf eine Lage senkrecht über der für das Halten der Bauunterlage vorgesehenen Stelle eingeschränkt, sondern kann auch seitlich versetzt sein, beispielsweise mit einem Kragarm. Diese Definition von "oberhalb" in Bezug auf die Haltevorrichtung gilt auch ganz allgemein im Rahmen der Erfindung.

Vorzugsweise ist die Haltevorrichtung als Gestell gebildet, das in seinem Inneren einen freien Raum enthält. Dadurch kann beispielsweise erreicht werden, dass ein Betrieb von innerhalb des freien Raumes wirkenden Komponenten nicht durch die Haltevorrichtung beeinträchtigt wird.

Die erfindungsgemäße Herstellvorrichtung dient zum generativen Herstellen eines dreidimensionalen Objekts durch schichtweises Aufbringen und selektives Verfestigen eines Aufbaumaterials, vorzugsweise eines Pulvers. Die Vorrichtung enthält eine Bauunterlage, auf der das Objekt aufgebaut werden soll, ein erfindungsgemäßes Hubsystem zum Halten und Höhenverstellen der Bauunterlage, einen Beschichter zum Aufbringen des Aufbaumaterials auf die Bauunterlage oder eine bereits zuvor aufgebrachtes Aufbaumaterial und eine Verfestigungsvorrichtung zum selektiven Verfestigen des aufgebrachten Aufbaumaterials an Stellen, die einem Querschnitt des herzustellenden Objekts entsprechen. Die Herstellvorrichtung ist ausgebildet und/oder gesteuert, die Schritte des Aufbringens und des selektiven Verfestigens zu wiederholen, bis das Objekt fertiggestellt ist, und die Bauunterlage mittels der Haltevorrichtung vor jedem Schritt des Aufbringens einer neuen Schicht um eine vorbestimmte Höhe abzusenken. Mit einer solchen Herstellvorrichtung kann beispielsweise der vergrößerte Arbeitsbereich des Hubsystems zum Herstellen höherer Objekte verwendet werden.

Vorzugsweise enthält die Herstellvorrichtung weiter einen Spindelantrieb zur Höhenverstellung der Haltevorrichtung, wobei der Spindelantrieb eine Spindelachse enthält, die oberhalb der Verfestigungsvorrichtung angeordnet ist. Dadurch kann beispielsweise eine präzise Verstellbarkeit der Höhen der Haltevorrichtung erzielt werden, und der Raum unterhalb der für das Halten der Bauunterlage vorgesehenen Stelle kann freigehalten und dadurch ein Verstellbereich der Bauunterlage vergrößert werden. Auch hier ist "oberhalb" nicht auf einer Lage senkrecht über der für das Halten der Bauunterlage vorgesehenen Stelle eingeschränkt, sondern kann auch seitlich versetzt sein, beispielsweise mit einem Kragarm.

Vorzugsweise ist die Haltevorrichtung als Gestell gebildet, das in seinem Inneren einen freien Raum enthält, und die Verfestigungsvorrichtung oder zumindest ein Teil von ihr ist in diesem freien Raum innerhalb des Gestells angeordnet. Dadurch kann beispielsweise erreicht werden, dass ein Betrieb der Verfestigungsvorrichtung nicht durch die Haltevorrichtung beeinträchtigt wird.

Vorzugsweise umfasst (insbesondere: ist) die Verfestigungsvorrichtung eine Belichtungsvorrichtung, die in der Lage ist, eine zum Verfestigen des Aufbaumaterials geeignete Strahlung selektiv auf die dem Querschnitt des herzustellenden Objekts entsprechenden Stellen des aufgebrachten Aufbaumaterials zu richten. Dadurch kann beispielsweise das Aufbaumaterial schnell und präzise verfestigt werden.

Vorzugsweise enthält die Herstellvorrichtung weiter einen Bauschacht, in den die Bauunterlage absenkbar ist. Dadurch kann beispielsweise ein seitlich begrenzter Raum zum Aufbau des Objekts bereitgestellt werden.

Vorzugsweise ist die Bauunterlage in Richtung eines Bodens, bevorzugt bis hin zum Boden des Bauschachts absenkbar. Dadurch kann beispielsweise ein möglichst großer Verstellbereich der Bauunterlage erzielt werden.

Das erfindungsgemäße Herstellverfahren dient zum generativen Herstellen eines dreidimensionalen Objekts durch schichtweises Aufbringen und selektives Verfestigen eines Aufbaumaterials, vorzugsweise eines Pulvers, auf einer von einem erfindungsgemäßen Hubsystem gehaltenen Bauunterlage. Das Verfahren enthält die Schritte des Absenkens der Bauunterlage mittels der Haltevorrichtung um eine vorbestimmte Höhe, des Aufbringens einer Schicht des Aufbaumaterials auf die Bauunterlage oder eine bereits zuvor aufgebrachte Schicht mittels eines Beschichters und des Verfestigens der aufgebrachten Schicht selektiv an Stellen, die einem Querschnitt des herzustellenden Objekts entsprechen, mittels einer Verfestigungsvorrichtung. Die Schritte des Absenkens, des Aufbringens und des Verfestigens werden wiederholt, bis das Objekt fertiggestellt ist. Mit einem solchen Verfahren kann beispielsweise der vergrößert Arbeitsbereich des Hubsystems zum Herstellen höherer Objekte verwendet werden.

Weitere Merkmale und Zweckmäßigkeiten der Erfindung ergeben sich aus der Beschreibung von Ausführungsbeispielen anhand der beigefügten Zeichnungen.
- Fig. 1: ist eine schematische, teilweise im Schnitt dargestellte Ansicht einer Vorrichtung zum generativen Herstellen eines dreidimensionalen Objekts gemäß einer Ausführungsform der vorliegenden Erfindung.
- Fig. 2: ist eine schematische perspektivische Darstellung eines in der in Fig. 1 gezeigten Vorrichtung enthaltenen Hubsystems gemäß einer Ausführungsform der vorliegenden Erfindung in einem aus einem Bauschacht herausgefahrenen Zustand.
- Fig. 3: ist eine schematische perspektivische Darstellung des in Fig. 2 gezeigten Hubsystems in einem in einen Bauschacht hineingefahrenen Zustand.

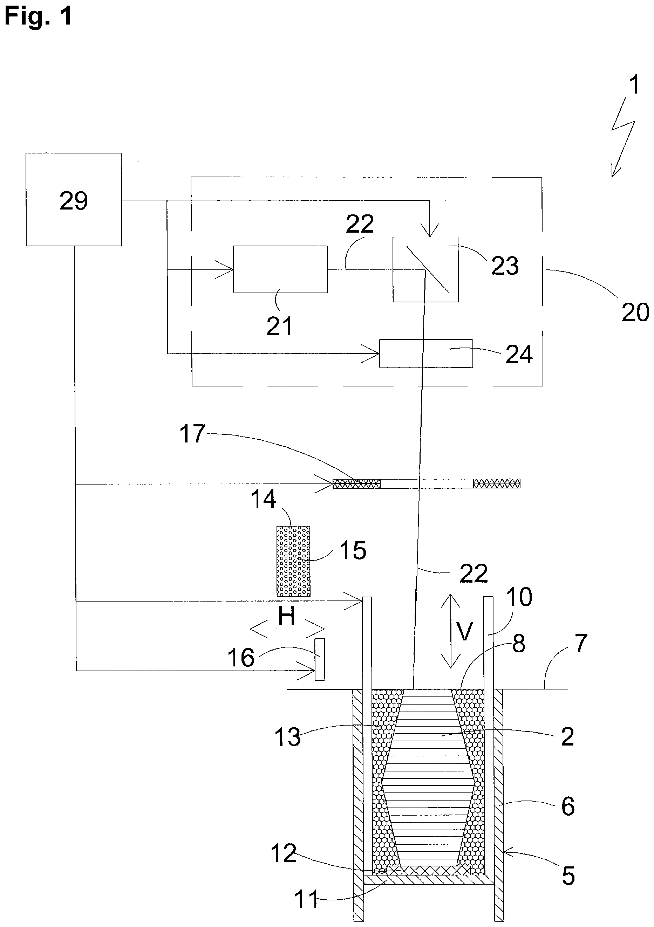

Im Folgenden wird mit Bezug auf Fig. 1 eine Ausführungsform der vorliegenden Erfindung beschrieben. Die in Fig. 1 dargestellte Vorrichtung ist eine Lasersinter- oder Laserschmelzvorrichtung 1. Zum Aufbauen eines Objekts 2 enthält sie einen nach oben offenen Behälter 5 mit einer Behälterwandung 6. Durch die obere Öffnung des Behälters 5 ist eine Arbeitsebene 7 definiert, wobei der innerhalb der Öffnung liegende Bereich der Arbeitsebene 7, der zum Aufbau des Objekts 2 verwendet werden kann, als Baufeld 8 bezeichnet wird.

An einer in einer vertikalen Richtung V bewegbaren Haltevorrichtung 10 ist eine Grundplatte 11 angebracht, die den Behälter 5 nach unten abschließt und damit dessen Boden bildet. Je nach verwendetem Pulver und Prozess kann auf der Grundplatte 11 noch eine Bauplattform 12 als Bauunterlage angebracht sein, auf der das Objekt 2 aufgebaut wird. Das Objekt 2 kann aber auch auf der Grundplatte 11 selber aufgebaut werden, die dann als Bauunterlage dient. In Fig. 1 ist das in dem Behälter 5 auf der Bauplattform 12 zu bildende Objekt 2 unterhalb der Arbeitsebene 7 in einem Zwischenzustand dargestellt mit mehreren verfestigten Schichten, umgeben von unverfestigt gebliebenem Aufbaumaterial 13.

Die Lasersintervorrichtung 1 enthält weiter einen Vorratsbehälter 14 für ein durch elektromagnetische Strahlung verfestigbares pulverförmiges Aufbaumaterial 15 und einen in einer horizontalen Richtung H bewegbaren Beschichter 16 zum Aufbringen des Aufbaumaterials 15 innerhalb des Baufelds 8. Vorzugsweise erstreckt sich der Beschichter 16 quer zu seiner Bewegungsrichtung über den ganzen zu beschichtenden Bereich.

Optional ist in der Prozesskammer 3 eine Strahlungsheizung 17 angeordnet, die zum Beheizen des aufgebrachten Aufbaumaterials 15 dient. Als Strahlungsheizung 17 kann beispielsweise ein Infrarotstrahler vorgesehen sein.

Die Lasersintervorrichtung 1 enthält ferner eine Belichtungsvorrichtung 20 mit einem Laser 21, der einen Laserstrahl 22 erzeugt, der über eine Umlenkvorrichtung 23 umgelenkt und durch eine Fokussiervorrichtung 24 auf die Arbeitsebene 7 fokussiert wird.

Weiter enthält die Lasersintervorrichtung 1 eine Steuereinheit 29, über die die einzelnen Bestandteile der Vorrichtung 1 in koordinierter Weise zum Durchführen des Bauprozesses gesteuert werden. Alternativ kann die Steuereinheit auch teilweise oder ganz außerhalb der Vorrichtung angebracht sein. Die Steuereinheit kann eine CPU enthalten, deren Betrieb durch ein Computerprogramm (Software) gesteuert wird. Das Computerprogramm kann getrennt von der Vorrichtung auf einem Speichermedium gespeichert sein, von dem aus es in die Vorrichtung, insbesondere in die Steuereinheit geladen werden kann.

Im Betrieb wird zum Aufbringen einer Pulverschicht zunächst die Grundplatte 11 mittels der Haltevorrichtung 10 um eine Höhe abgesenkt, die der gewünschten Schichtdicke entspricht. Der Beschichter 16 fährt zunächst zu dem Vorratsbehälter 14 und nimmt aus ihm eine zum Aufbringen einer Schicht ausreichende Menge des Aufbaumaterials 15 auf. Dann fährt er über das Baufeld 8, bringt dort pulverförmiges Aufbaumaterials 15 auf die Bauunterlage oder eine bereits vorher vorhandene Pulverschicht auf und zieht es zu einer Pulverschicht aus. Das Aufbringen erfolgt zumindest über den gesamten Querschnitt des herzustellenden Objekts 2, vorzugsweise über das gesamte Baufeld 8, also den durch die Behälterwandung 6 begrenzten Bereich. Optional wird das pulverförmige Aufbaumaterial 15 mittels einer Strahlungsheizung 17 auf eine Arbeitstemperatur aufgeheizt.

Anschließend wird der Querschnitt des herzustellenden Objekts 2 von dem Laserstrahl 22 abgetastet, sodass das pulverförmige Aufbaumaterial 15 an den Stellen verfestigt wird, die dem Querschnitt des herzustellenden Objekts 2 entsprechen. Dabei werden die Pulverkörner an diesen Stellen mittels der durch die Strahlung eingebrachten Energie teilweise oder vollständig aufgeschmolzen, so dass sie nach einer Abkühlung miteinander verbunden als Festkörper vorliegen. Diese Schritte werden solange wiederholt, bis das Objekt 2 fertiggestellt ist und der Prozesskammer 3 entnommen werden kann.

Gemäß der vorliegenden Erfindung ist die Haltevorrichtung 10 so angeordnet, dass die Bauunterlage (Grundplatte 11 und/oder Bauplattform 12, in der folgenden Beschreibung wird der Einfachheit halber lediglich die Grundplatte 11 erwähnt) an der Unterseite der Haltevorrichtung 10 so angebracht ist, dass deren zum Aufbau des Objekts dienende Aufbauoberfläche nach oben, also in Richtung zur Haltevorrichtung weist.

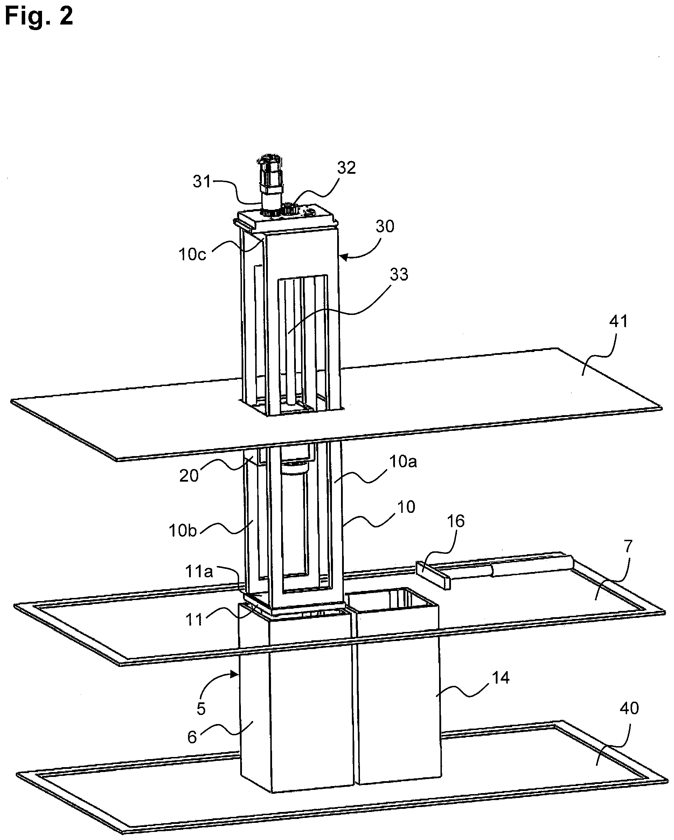

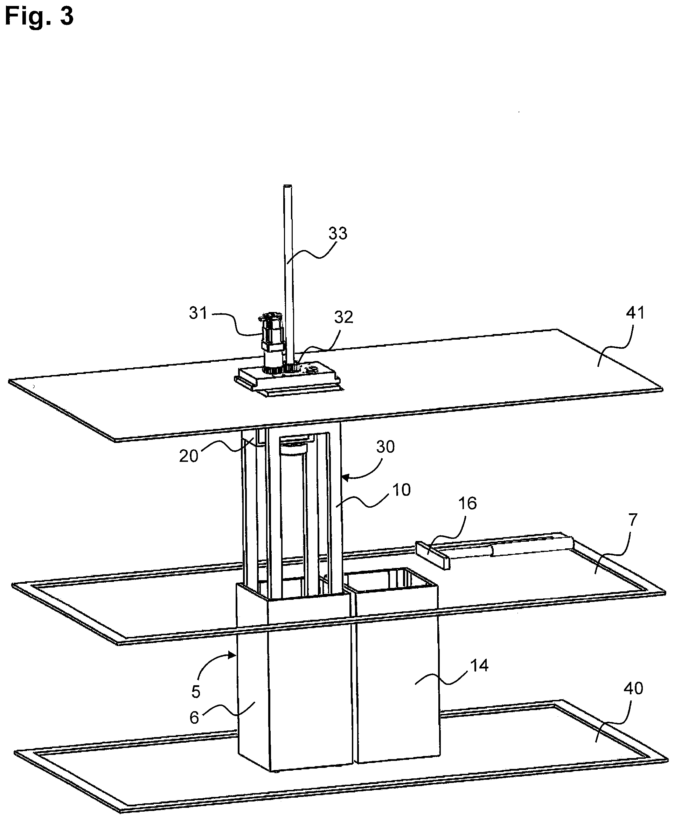

Ein Beispiel für eine solche Anordnung wird im Folgenden mit Bezug auf Fig. 2 und 3 beschrieben. In diesen Figuren ist der Behälter 5 mit einem rechteckigen Querschnitt dargestellt, er kann aber auch einen beliebigen anderen Querschnitt aufwiesen. Wegen seiner senkrechten Anordnung und der Form als von Wänden 6 umgebener Hohlraum wird er auch als Bauschacht bezeichnet. Fig. 2 zeigt ein Hubsystem 30 in einem aus dem Bauschacht 5 herausgefahrenen Zustand und Fig. 3 in einem in den Bauschacht 5 hineingefahrenen Zustand.

Der Vorratsbehälter 14 ist in dieser Ausführungsform ebenfalls als Schacht (Dosierschacht) gebildet, in dem das Aufbaumaterial 15 durch einen (nicht gezeigten) Stempel nach oben gedrückt und dann durch den Beschichter 16 über die Arbeitsebene 7 geschoben wird. Bau- und Pulverschacht reichen bis zur Bodenebene 40 der Vorrichtung.

Die Belichtungsvorrichtung 20 ist in der Optikebene 41 ortsfest mit der Vorrichtung 1 verbunden. Diese Optikebene dient in Fig. 2 und 3 zum Verdeutlichen der unterschiedlichen Betriebsstellungen des Hubsystems 30.

Das Hubsystem 30 ist in dieser Ausführungsform als Portalhubsystem gebildet. Das bedeutet, dass die Haltevorrichtung 10 als Portal gebildet ist mit zwei senkrecht und parallel zueinander verlaufenden Seitenteilen 10a, 10b und einem deren oberes Ende verbindenden horizontalen Verbindungsteil 10c.

Die Haltevorrichtung 10 ist mittels eines aus einer Antriebseinheit 31, einer Spindelmutter 32 und einer Spindelachse 33 gebildeten Spindelantriebs vertikal verstellbar. Dazu sind die Antriebseinheit 31 und die Spindelmutter 32 an dem Verbindungsteil 10c angeordnet. Die Spindelmutter 32 ist dabei drehbar gelagert und kann von der Antriebseinheit 31 in Drehung versetzt werden. Eine ortsfest mit der Vorrichtung 1 verbundene Spindelachse 33 verläuft durch die Spindelmutter 32, so dass die Drehung der Spindelmutter 32 in eine Vertikalbewegung der Haltevorrichtung 10 umgesetzt wird.

Zwischen den Seitenteilen 10a und 10b liegt ein freier Raum. Da die Spindelachse oberhalb der Belichtungsvorrichtung 20 angeordnet ist, liegt die Belichtungsvorrichtung 20 in diesem freien Raum zwischen den Seitenteilen 10a und 10b. Bei der Vertikalbewegung der Haltevorrichtung 10 bewegen sich diese Seitenteile also seitlich an der Belichtungsvorrichtung 20 vorbei und beeinträchtigen somit nicht deren Betrieb. Auch der Beschichter 16 fährt zum Aufbringen des Aufbaumaterials durch diesen freien Raum und wird daher durch die Haltevorrichtung 10 nicht behindert.

Vor Beginn der Herstellung eines Objekts wird die als Bauunterlage dienende Grundplatte 11 an der Unterseite der Haltevorrichtung 10 so angebracht, dass ihre zum Aufbau des Objekts 2 dienende Aufbauoberfläche 11a nach oben, also in Richtung zur Haltevorrichtung 10 weist. Die Haltevorrichtung 10 greift also von oben an der Grundplatte 11 an. Das Befestigen der Grundplatte 11 an der Haltevorrichtung 10 kann mit einem beliebigen bekannten Befestigungsmittel geschehen, beispielsweise durch Verschrauben.

Zunächst wird die Grundplatte 11 mittels einer Vertikalbewegung der Haltevorrichtung 10 soweit in den Bauschacht 5 eingefahren, dass die erste Schicht des Aufbaumaterials aufgebracht und eventuell selektiv verfestigt werden kann. Schrittweise wird die Grundplatte 11 dann für jede weitere Schicht weiter in den Bauschacht 5 abgesenkt, bis das Objekt fertiggestellt ist.

Fig. 3 zeigt das Hubsystem 30 in einem in den Bauschacht 5 hineingefahrenen Zustand. Der Übersichtlichkeit halber sind dabei das Objekt und das unverfestigt gebliebene Aufbaumaterial weggelassen. Während das Verbindungsteil 10c der Haltevorrichtung 10 bei der in Fig. 2 gezeigten Stellung weit oberhalb der Optikebene 41 liegt, liegt es bei der in Fig. 3 gezeigten Stellung nahezu in der Optikebene 41. Vorzugsweise ist das Hubsystem 30 so gebildet, dass die Grundplatte 11 bis hin zur Bodenebene 40 absenkbar ist.

Bei der erfindungsgemäßen Anbringung der Bauunterlage 11 an der Unterseite der Haltevorrichtung 10 kann die gesamte Höhe des Bauschachts 5 für den Aufbau des Objekts 2 genutzt werden. Somit können bei gleicher Höhe der Arbeitsebene höhere Bauteile hergestellt werden als beim Halten der Bauunterlage von unten und der Anordnung des Antriebs zur Höhenverstellung unterhalb der Bauunterlage. Bei einer solchen Anordnung müsste für höhere Bauteile die Arbeitsebene erhöht werden, so dass beispielsweise für den Bediener ein Podest zur Bedienung erforderlich wäre.

Durch das Halten der Bauunterlage von oben wird dagegen erreicht, dass der Arbeitsbereich der Vorrichtung tiefer liegt und daher der Raum nach unten besser zum Bauen höherer Bauteile genutzt werden kann, ohne dass der Arbeitsbereich für den Bediener erhöht werden muss.

Das Halten der Bauunterlage von oben kann auch anders erfolgen als durch eine portalförmige Haltevorrichtung. Statt zwei Seitenteilen können beispielsweise auch mehr als zwei Elemente (z.B. Pfosten) an der Bauunterlage angreifen, bzw. sie kann durch Seile gehalten werden.

Während gemäß der obigen Beschreibung die gesamte Belichtungsvorrichtung in dem freien Raum zwischen den Seitenteilen angeordnet ist, kann auch nur ein Teil dort angeordnet sein, beispielsweise ein aus Umlenk- und Fokussiervorrichtung gebildeter Scanner, während andere Teile, beispielsweise der den Laserstrahl erzeugende Laser, außerhalb des Hubsystems angeordnet sein kann und der Laserstrahl dann beispielsweise mittels einer Glasfaser zu dem Scanner geleitet wird.

Auch wenn die vorliegende Erfindung anhand einer Lasersinter- bzw. Laserschmelzvorrichtung beschrieben wurde, ist sie nicht auf das Lasersintern oder Laserschmelzen eingeschränkt. Sie kann auf beliebige Verfahren zum generativen Herstellen eines dreidimensionalen Objektes durch schichtweises Aufbringen und selektives Verfestigen eines Aufbaumaterials angewendet werden.

Der Belichter kann beispielsweise einen oder mehrere Gas- oder Festkörperlaser oder jede andere Art von Laser wie z.B. Laserdioden, insbesondere VCSEL (Vertical Cavity Surface Emitting Laser) oder VECSEL (Vertical External Cavity Surface Emitting Laser), oder eine Zeile dieser Laser umfassen. Allgemein kann als Belichter jede Einrichtung verwendet werden, mit der Energie als Wellen- oder Teilchenstrahlung selektiv auf eine Schicht des Aufbaumaterials aufgebracht werden kann. Anstelle eines Lasers können beispielsweise eine andere Lichtquelle, ein Elektronenstrahl oder jede andere Energie- bzw. Strahlenquelle verwendet werden, die geeignet ist, das Aufbaumaterial zu verfestigen. Statt des Ablenkens eines Strahls kann auch das Belichten mit einem verfahrbaren Zeilenbelichter angewendet werden. Auch auf das selektive Maskensintern, bei dem eine ausgedehnte Lichtquelle und eine Maske verwendet werden, oder auf das High-Speed-Sintern (HSS), bei dem auf dem Aufbaumaterial selektiv ein Material aufgebracht wird, das die Strahlungsabsorption an den entsprechenden Stellen erhöht (Absorptionssintern) oder verringert (Inhibitionssintern), und dann unselektiv großflächig oder mit einem verfahrbaren Zeilenbelichter belichtet wird, kann die Erfindung angewendet werden.

Anstelle des Einbringens von Energie kann das selektive Verfestigen des aufgetragenen Aufbaumaterials auch durch 3D-Drucken erfolgen, beispielsweise durch Aufbringen eines Klebers. Allgemein bezieht sich die Erfindung auf das generative Herstellen eines Objekts mittels schichtweisen Auftragens und selektiven Verfestigens eines Aufbaumaterials unabhängig von der Art und Weise, in der das Aufbaumaterial verfestigt wird.

## Patentansprüche

1. Herstellvorrichtung (1) zum generativen Herstellen eines dreidimensionalen Objekts (2) durch schichtweises Aufbringen und selektives Verfestigen eines Aufbaumaterials (15), enthaltend:
eine Bauunterlage (11, 12), auf der das Objekt aufgebaut werden soll,
ein Hubsystem (30) zum Halten und Höhenverstellen der Bauunterlage,
wobei das Hubsystem eine Haltevorrichtung (10) enthält, die zum Halten und Höhenverstellen der Bauunterlage geeignet ist,
wobei die Haltevorrichtung in einer einem Betriebszustand innerhalb der Herstellvorrichtung entsprechenden Lage so angeordnet ist, dass die Bauunterlage an der Unterseite der Haltevorrichtung so angebracht ist, dass die Aufbauoberfläche in Richtung zur Haltevorrichtung weist,
wobei die Herstellvorrichtung weiter enthält: einen Beschichter (16) zum Aufbringen des Aufbaumaterials auf die Bauunterlage oder eine bereits zuvor aufgebrachtes Aufbaumaterial und
eine Verfestigungsvorrichtung (20) zum selektiven Verfestigen des aufgebrachten Aufbaumaterials an Stellen, die einem Querschnitt des herzustellenden Objekts entsprechen,
wobei die Herstellvorrichtung ausgebildet und/oder gesteuert ist,
die Schritte des Aufbringens und des selektiven Verfestigens zu wiederholen, bis das Objekt fertiggestellt ist, und
die Bauunterlage mittels der Haltevorrichtung (10) vor jedem Schritt des Aufbringens einer neuen Schicht um eine vorbestimmte Höhe abzusenken.

2. Herstellvorrichtung gemäß Anspruch 1,
wobei das Hubsystem (30) weiter einen Spindelantrieb (31-33) zur Höhenverstellung der Haltevorrichtung (10) enthält.

3. Herstellvorrichtung gemäß Anspruch 2,
wobei der Spindelantrieb eine Antriebseinheit (31) enthält, die an der Haltevorrichtung (10) angeordnet ist.

4. Herstellvorrichtung gemäß Anspruch 2 oder 3,
wobei der Spindelantrieb eine Spindelachse (33) enthält, die in der dem Betriebszustand innerhalb der Herstellvorrichtung (1) entsprechenden Lage oberhalb der für das Halten der Bauunterlage (11, 12) vorgesehenen Stelle der Haltevorrichtung (10) angeordnet ist.

5. Herstellvorrichtung gemäß einem der Ansprüche 2 bis 4, wobei der Spindelantrieb eine Spindelachse (33) enthält, die oberhalb der Verfestigungsvorrichtung (20) angeordnet ist.

6. Herstellvorrichtung gemäß einem der Ansprüche 1 bis 5,
wobei die Haltevorrichtung (10) als Gestell (10a, 10b) gebildet ist, das in seinem Inneren einen freien Raum enthält.

7. Herstellvorrichtung (1) nach einem der Ansprüche 1 bis 6, wobei das Aufbaumaterial (15) ein Pulver ist.

8. Herstellvorrichtung gemäß einem der Ansprüche 1 bis 7,
wobei die Haltevorrichtung (10) als Gestell (10a, 10b) gebildet ist, das in seinem Inneren einen freien Raum enthält, und
die Verfestigungsvorrichtung (20) oder zumindest ein Teil davon in diesem freien Raum innerhalb des Gestells angeordnet ist.

9. Herstellvorrichtung gemäß einem der Ansprüche 1 bis 8,
wobei die Verfestigungsvorrichtung eine Belichtungsvorrichtung (20) umfasst, die in der Lage ist, eine zum Verfestigen des Aufbaumaterials geeignete Strahlung (22) selektiv auf die dem Querschnitt des herzustellenden Objekts (2) entsprechenden Stellen des aufgebrachten Aufbaumaterials zu richten.

10. Herstellvorrichtung gemäß einem der Ansprüche 1 bis 9,
die weiter einen Bauschacht (5) enthält, in den die Bauunterlage (11, 12) absenkbar ist.

11. Herstellvorrichtung gemäß Anspruch 10,
wobei die Bauunterlage (11, 12) in Richtung eines Bodens (40), bevorzugt bis hin zum Boden des Bauschachts (5) absenkbar ist.

12. Verfahren zum generativen Herstellen eines dreidimensionalen Objekts (2) durch schichtweises Aufbringen und selektives Verfestigen eines Aufbaumaterials (15), vorzugsweise eines Pulvers, in einer Herstellvorrichtung gemäß einem der Ansprüche 1 bis 11, wobei das Objekt (2) auf der von der Haltevorrichtung (10) des Hubsystems (30) gehaltenen Bauunterlage (11, 12) hergestellt wird, mit den Schritten:
Absenken der Bauunterlage mittels der Haltevorrichtung um eine vorbestimmte Höhe,
Aufbringen einer Schicht des Aufbaumaterials auf die Bauunterlage oder eine bereits zuvor aufgebrachte Schicht mittels eines Beschichters (16) und
Verfestigen der aufgebrachten Schicht selektiv an Stellen, die einem Querschnitt des herzustellenden Objekts entsprechen, mittels einer Verfestigungsvorrichtung (20),
wobei die Schritte des Absenkens, des Aufbringens und des Verfestigens wiederholt werden, bis das Objekt fertiggestellt ist.

## Claims

1. A manufacturing device (1) for generatively manufacturing a three-dimensional object (2) by layerwise application and selective solidification of a building material (15), comprising:
a building base (11, 12) on which the object is to be built,
a lifting system (30) for holding and adjusting the height of the building base,
wherein the lifting system includes a holding device (10) which is suitable for holding and height adjusting the building base,
wherein in a position corresponding to an operating state within the manufacturing device, the holding device is arranged in such a way that the building base is attached to the underside of the holding device so that the building surface faces towards the holding device,
wherein the manufacturing device further comprises: a recoater (16) for applying the building material to the building base or a previously applied building material, and
a solidification device (20) for selectively solidifying the applied building material at locations corresponding to a cross-section of the object to be manufactured,
wherein the manufacturing device is designed and/or controlled,
to repeat the steps of application and selective solidification until the object is completed, and
to lower the building base by means of the holding device (10) by a predetermined height before each step of applying a new layer.

2. The manufacturing device according to claim 1,
wherein the lifting system (30) further comprises a spindle drive (31-33) for the height adjustment of the holding device (10).

3. The manufacturing device according to claim 2,
wherein the spindle drive comprises a drive unit (31) which is arranged on the holding device (10).

4. The manufacturing device according to claim 2 or 3,
wherein the spindle drive comprises a spindle axis (33) which, in the position corresponding to the operating state within the manufacturing device (1), is arranged above the location of the holding device (10) provided for holding the building base (11, 12).

5. The manufacturing device according to one of claims 2 to 4,
wherein the spindle drive includes a spindle axis (33) arranged above the solidification device (20).

6. The manufacturing device according to one of claims 1 to 5,
wherein the holding device (10) is formed as a frame (10a, 10b) which comprises a free space in its interior.

7. The manufacturing device according to one of claims 1 to 6,
wherein the building material (15) is a powder.

8. The manufacturing device according to one of claims 1 to 7,
wherein the holding device (10) is formed as a frame (10a, 10b) having a free space in its interior, and
the solidification device (20) or at least a part thereof is arranged in this free space within the frame.

9. The manufacturing device according to one of claims 1 to 8,
wherein the solidification device comprises an irradiation device (20) capable of selectively directing a radiation (22) suitable for solidifying the building material onto the locations of the applied building material corresponding to the cross-section of the object (2) to be manufactured.

10. The manufacturing device according to one of claims 1 to 9,
further comprising a building shaft (5) into which the building base (11, 12) can be lowered.

11. The manufacturing device according to claim 10,
wherein the building base (11, 12) can be lowered into the direction of a bottom (40), preferably down to the bottom of the building shaft (5).

12. A method for generatively manufacturing a three-dimensional object (2) by layerwise application and selective solidification of a building material (15), preferably a powder, in a manufacturing device according to one of claims 1 to 11, wherein the object (2) is manufactured on the building base (11, 12) held by the holding device (10) of the lifting system (30), comprising the steps:
lowering the building base by means of the holding device by a predetermined height,
applying a layer of the building material to the building base or a previously applied layer by means of a recoater (16) and
solidifying the applied layer selectively at locations corresponding to a cross-section of the object to be manufactured by means of a solidification device (20),
wherein the steps of lowering, applying and solidifying are repeated until the object is completed.

## Revendications

1. Dispositif de fabrication (1) pour la fabrication additive d'un objet tridimensionnel (2) par application couche par couche et solidification sélective d'un matériau de construction (15), comprenant :
un support de construction (11, 12) sur lequel l'objet est destiné à être construit,
un système de levage (30) pour le maintien et le réglage en hauteur du support de construction,
dans lequel le système de levage comprend un dispositif de maintien (10) qui est approprié pour le maintien et le réglage en hauteur du support de construction,
dans lequel le dispositif de maintien est agencé dans une position correspondant à un état de fonctionnement à l'intérieur du dispositif de fabrication de telle sorte que le support de construction est monté sur le côté inférieur du dispositif de maintien de telle sorte que la surface de construction est orientée vers le dispositif de maintien,
dans lequel le dispositif de fabrication comprend en outre : un enducteur (16) pour appliquer le matériau de construction sur le support de construction ou un matériau de construction déjà appliqué auparavant et
un dispositif de solidification (20) pour solidifier sélectivement le matériau de construction appliqué à des positions qui correspondent à une section transversale de l'objet à fabriquer,
dans lequel le dispositif de fabrication est configuré et/ou commandé pour
répéter les étapes d'application et de solidification sélective jusqu'à ce que l'objet soit terminé, et
abaisser le support de construction d'une hauteur prédéterminée au moyen du dispositif de maintien (10) avant chaque étape d'application d'une nouvelle couche.

2. Dispositif de fabrication selon la revendication 1,
dans lequel le système de levage (30) comprend en outre un entraînement vis-écrou (31-33) pour le réglage en hauteur du dispositif de maintien (10).

3. Dispositif de fabrication selon la revendication 2,
dans lequel l'entraînement vis-écrou comprend une unité d'entraînement (31) qui est disposée sur le dispositif de maintien (10).

4. Dispositif de fabrication selon la revendication 2 ou 3,
dans lequel l'entraînement vis-écrou comprend un axe de vis (33) qui est disposé dans la position correspondant à l'état de fonctionnement à l'intérieur du dispositif de fabrication (1) au-dessus de la position du dispositif de maintien (10) prévue pour le maintien du support de construction (11, 12).

5. Dispositif de fabrication selon l'une quelconque des revendications 2 à 4, dans lequel l'entraînement vis-écrou comprend un axe de vis (33) qui est disposé au-dessus du dispositif de solidification (20).

6. Dispositif de fabrication selon l'une quelconque des revendications 1 à 5,
dans lequel le dispositif de maintien (10) est formé en tant que bâti (10a, 10b) comprenant un espace libre dans son intérieur.

7. Dispositif de fabrication (1) selon l'une quelconque des revendications 1 à 6, dans lequel le matériau de construction (15) est une poudre.

8. Dispositif de fabrication selon l'une quelconque des revendications 1 à 7,
dans lequel le dispositif de maintien (10) est formé en tant que bâti (10a, 10b) qui comprend un espace libre à l'intérieur de celui-ci, et
le dispositif de solidification (20) ou au moins une partie de celui-ci est disposé dans cet espace libre à l'intérieur du bâti.

9. Dispositif de fabrication selon l'une quelconque des revendications 1 à 8,
dans lequel le dispositif de solidification comprend un dispositif d'exposition (20) qui est capable de diriger sélectivement un rayonnement (22) approprié pour solidifier le matériau de construction sur les positions du matériau de construction appliqué qui correspondent à la section transversale de l'objet à fabriquer (2).

10. Dispositif de fabrication selon l'une quelconque des revendications 1 à 9,
qui comprend en outre un puits de construction (5) dans lequel le support de construction (11, 12) peut être abaissé.

11. Dispositif de fabrication selon la revendication 10,
dans lequel le support de construction (11, 12) peut être abaissé en direction d'un fond (40), de préférence jusqu'au fond du puits de construction (5).

12. Procédé de fabrication additive d'un objet tridimensionnel (2) par application couche par couche et solidification sélective d'un matériau de construction (15), de préférence d'une poudre, dans un dispositif de fabrication selon l'une quelconque des revendications 1 à 11, dans lequel l'objet (2) est fabriqué sur le support de construction (11, 12) maintenu par le dispositif de maintien (10) du système de levage (30), comprenant les étapes consistant à :
abaisser le support de construction d'une hauteur prédéterminée au moyen du dispositif de maintien,
appliquer une couche du matériau de construction sur le support de construction ou une couche déjà appliquée auparavant au moyen d'un enducteur (16) et
solidifier sélectivement la couche appliquée à des positions qui correspondent à une section transversale de l'objet à fabriquer au moyen d'un dispositif de solidification (20),
dans lequel les étapes d'abaissement, d'application et de solidification sont répétées jusqu'à ce que l'objet soit terminé.
